# EUROPEAN PATENT APPLICATION

(11) **EP 4 502 639 A1**
(43) Date of publication of application: **05.02.2025**
(21) Application number: 24185227.6
(22) Date of filing: 28.06.2024
(51) Int. Cl.: G01S 5/00, G01S 5/02, H04W 64/00

(54) **APPARATUS, METHOD, AND COMPUTER PROGRAM**

(30) Priority: 31.07.2023 GB 202311765
(71) Applicant: Nokia Technologies Oy, 02610 Espoo (FI)
(72) Inventor: BARBU, Oana-Elena, Aalborg (DK); CARRILLO MELGAREJO, Dick, Lappeenranta (FI)
(74) Representative: Nokia EPO representatives

(57) **Abstract**

The disclosure relates to an apparatus configured to: send (900), to a location server, information indicating a set of models available at the apparatus for determining positioning information; receive (902), from the location server, information indicating a subset of models amongst the set of models to be activated and a combination function for combining outputs of the subset of models ; activate (904) the subset of models; and use (906) the combination function for combining outputs of the subset of models.

## Description

### Field of the disclosure

The present disclosure relates to an apparatus, a method, and a computer program for managing models for determining positioning information in a communication system.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

### Summary

According to an aspect there is provided an apparatus comprising at least one processor and at least one memory storing instructions that, when executed by the at least one processor, cause the apparatus at least to: send, to a location server, information indicating a set of models available at the apparatus for determining positioning information; receive, from the location server, information indicating a subset of models amongst the set of models to be activated and a combination function for combining outputs of the subset of models ; activate the subset of models; and use the combination function for combining outputs of the subset of models.

The set of models may achieve a same functionality in different scenarios.

Scenarios may refer to geographical areas with specific propagation conditions.

The different scenarios comprise at least one of: an indoor scenario; an outdoor scenario; an urban scenario; or a rural scenario.

A functionality may comprise at least one of: location estimation; line of sight estimation; time of arrival estimation; an angle of arrival estimation; an angle of departure estimation; or a carrier phase estimation.

The information indicating the subset of models may comprise identifiers of the subset of models determined at the location server.

The information indicating the subset of models may comprise at least one criterion to determine the subset of models; and the least one memory may store instructions that, when executed by the at least one processor, cause the apparatus at least to determine the subset of models based on the at least one criterion.

A data set may comprise a plurality of entries. An entry may comprise a plurality of measurements. The plurality of measurements may comprise at least one of signal to interference plus noise ratio measurement, a line of sight measurement, an angle of departure measurement or an angle of arrival measurement.

The at least one criterion may comprise a similarity between measurements of a data set available at the apparatus and measurements of a data set used to train the subset of models.

The similarity may refer to a similarity between distributions of measurements of a data set available at the apparatus and measurements of a data set used to train the subset of models.

A similarity between distributions of measurements of a data set available at the apparatus and measurements of a data set used to train the subset of models may refer to a difference between parameters of the distribution of measurement of the data set available at the apparatus and parameters of the distribution of measurements of the data set used to train the subset of models being lower than a threshold.

Parameters of distribution comprise a mean or a variance.

The measurements of the data set available at the apparatus and the measurements of the data set used to train the subset of models may comprise signal to interference plus noise ratio measurements.

The combination function may performs at least one of: an average of the outputs of the subset of models ; a weighted average of the outputs of the subset of models; a weighted powered average of the outputs of the subset of models; or a median of the outputs of the subset of models.

The at least one memory may store instructions that, when executed by the at least one processor, cause the apparatus at least to: send, to the location server, the combined outputs.

The apparatus may be a user equipment.

According to an aspect there is provided an apparatus comprising means for: sending, to a location server, information indicating a set of models available at the apparatus for determining positioning information; receiving, from the location server, information indicating a subset of models amongst the set of models to be activated and a combination function for combining outputs of the subset of models ; activating the subset of models; and using the combination function for combining outputs of the subset of models.

According to an aspect there is provided an apparatus comprising circuitry configured to: send, to a location server, information indicating a set of models available at the apparatus for determining positioning information; receive, from the location server, information indicating a subset of models amongst the set of models to be activated and a combination function for combining outputs of the subset of models ; activate the subset of models; and use the combination function for combining outputs of the subset of models.

According to an aspect there is provided a method comprising: sending, to a location server, information indicating a set of models available at an apparatus for determining positioning information; receiving, from the location server, information indicating a subset of models amongst the set of models to be activated and a combination function for combining outputs of the subset of models ; activating the subset of models; and using the combination function for combining outputs of the subset of models.

The set of models may achieve a same functionality in different scenarios.

Scenarios may refer to geographical areas with specific propagation conditions.

The different scenarios comprise at least one of: an indoor scenario; an outdoor scenario; an urban scenario; or a rural scenario.

A functionality may comprise at least one of: location estimation; line of sight estimation; time of arrival estimation; an angle of arrival estimation; an angle of departure estimation; or a carrier phase estimation.

The information indicating the subset of models may comprise identifiers of the subset of models determined at the location server.

The information indicating the subset of models may comprise at least one criterion to determine the subset of models; and method may comprise: determining the subset of models based on the at least one criterion.

A data set may comprise a plurality of entries. An entry may comprise a plurality of measurements. The plurality of measurements may comprise at least one of signal to interference plus noise ratio measurement, a line of sight measurement, an angle of departure measurement or an angle of arrival measurement.

The at least one criterion may comprise a similarity between measurements of a data set available at the apparatus and measurements of a data set used to train the subset of models.

The similarity may refer to a similarity between distributions of measurements of a data set available at the apparatus and measurements of a data set used to train the subset of models.

A similarity between distributions of measurements of a data set available at the apparatus and measurements of a data set used to train the subset of models may refer to a difference between parameters of the distribution of measurement of the data set available at the apparatus and parameters of the distribution of measurements of the data set used to train the subset of models being lower than a threshold.

Parameters of distribution comprise a mean or a variance.

The measurements of the data set available at the apparatus and the measurements of the data set used to train the subset of models may comprise signal to interference plus noise ratio measurements.

The combination function may performs at least one of: an average of the outputs of the subset of models ; a weighted average of the outputs of the subset of models; a weighted powered average of the outputs of the subset of models; or a median of the outputs of the subset of models.

The method may comprise: sending, to the location server, the combined outputs.

The apparatus may be a user equipment.

According to an aspect there is provided a computer program comprising computer executable code which when run on at least one processor is configured to: send, to a location server, information indicating a set of models available at an apparatus for determining positioning information; receive, from the location server, information indicating a subset of models amongst the set of models to be activated and a combination function for combining outputs of the subset of models ; activate the subset of models; and use the combination function for combining outputs of the subset of models.

According to an aspect there is provided an apparatus comprising at least one processor and at least one memory storing instructions that, when executed by the at least one processor, cause the apparatus at least to: receive, from a user equipment, information indicating a set of models available at the user equipment for determining positioning information; and send, to the user equipment, information indicating a subset of models amongst the set of models to be activated and a combination function for combining outputs of the subset of models.

The at least one memory may store instructions that, when executed by the at least one processor, cause the apparatus at least to: determine the subset of models; and wherein the information indicating the subset of models comprises at least one identifier of the determined subset of models.

The at least one memory may store instructions that, when executed by the at least one processor, cause the apparatus at least to: estimate a movement of the user equipment; and determine the subset of models based on the estimation.

Estimating a movement of the user equipment may comprise: estimating a movement of the user equipment in between scenarios for which models are available at the user equipment or a movement of the user equipment in a scenario for which no model is available at the user equipment.

The information indicating the subset of models may comprise at least one criterion to determine the subset of models at the user equipment.

The at least one memory may store instructions that, when executed by the at least one processor, cause the apparatus at least to: receive, from the user equipment, a combined outputs of the subset of models.

The apparatus may be a location server.

The apparatus may be comprise location management function.

According to an aspect there is provided an apparatus comprising means for: receiving, from a user equipment, information indicating a set of models available at the user equipment for determining positioning information; and sending, to the user equipment, information indicating a subset of models amongst the set of models to be activated and a combination function for combining outputs of the subset of models.

According to an aspect there is provided an apparatus comprising circuitry configured to: receive, from a user equipment, information indicating a set of models available at the user equipment for determining positioning information; and send, to the user equipment, information indicating a subset of models amongst the set of models to be activated and a combination function for combining outputs of the subset of models.

According to an aspect there is provided a method comprising: receiving, from a user equipment, information indicating a set of models available at the user equipment for determining positioning information; and sending, to the user equipment, information indicating a subset of models amongst the set of models to be activated and a combination function for combining outputs of the subset of models.

The method may be performed by an apparatus.

The method may comprise: determining the subset of models; and wherein the information indicating the subset of models comprises at least one identifier of the determined subset of models.

The method may comprise: estimating a movement of the user equipment; and determine the subset of models based on the estimation.

Estimating a movement of the user equipment may comprise: estimating a movement of the user equipment in between scenarios for which models are available at the user equipment or a movement of the user equipment in a scenario for which no model is available at the user equipment.

The information indicating the subset of models may comprise at least one criterion to determine the subset of models at the user equipment.

The method may comprise: receiving, from the user equipment, a combined outputs of the subset of models.

The apparatus may be a location server.

The apparatus may comprise a location management function.

According to an aspect there is provided a computer program comprising computer executable code which when run on at least one processor is configured to: receiving, from a user equipment, information indicating a set of models available at the user equipment for determining positioning information; and sending, to the user equipment, information indicating a subset of models amongst the set of models to be activated and a combination function for combining outputs of the subset of models.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

### List of abbreviations

- AD:: Assistance Data
- AF:: Application Function
- AI:: Artificial Intelligence
- AMF:: Access and Mobility Management Function
- API:: Application Programming Interface
- BS:: Base Station
- CU:: Centralized Unit
- DL:: Downlink
- DU:: Distributed Unit
- gNB:: gNodeB
- GSM:: Global System for Mobile communication
- HSS:: Home Subscriber Server
- IE:: Information Element
- IoT:: Internet of Things
- LMF:: Location Management Function
- LPP:: Location Positioning Protocol
- LTE:: Long Term Evolution
- MAC:: Medium Access Control
- ML:: Machine Learning
- MS:: Mobile Station
- MTC:: Machine Type Communication
- NEF:: Network Exposure Function
- NF:: Network Function
- NR:: New radio
- NRF:: Network Repository Function
- PDU:: Packet Data Unit
- RAM:: Random Access Memory
- (R)AN:: (Radio) Access Network
- ROM:: Read Only Memory
- SINR:: Signal to Interference plus Noise Ratio
- SMF:: Session Management Function
- TR:: Technical Report
- TS:: Technical Specification
- UE:: User Equipment
- UMTS:: Universal Mobile Telecommunication System
- 3GPP:: 3^{rd} Generation Partnership Project
- 5G:: 5^{th} Generation
- 5GC:: 5G Core network
- 5GS:: 5G System

### Brief Description of the Figures

Embodiments will now be described, by way of example only, with reference to the accompanying Figures in which:
Fig. 1 shows a schematic representation of a 5G system;
Fig. 2 shows a schematic representation of a control apparatus;
Fig. 3 shows a schematic representation of a user equipment;
Fig. 4 shows a schematic representation of a user equipment moving through different scenarios;
Fig. 5 shows a signaling diagram of a process for combining outputs of a subset of models ;
Fig. 6 shows a graph with position information determined for different scenarios and in between scenarios;
Fig. 7 shows a block diagram of a method for combining outputs of a subset of models ;
Fig. 8 shows a signaling diagram of an alternative process for combining outputs of a subset of models ;
Fig. 9 shows a block diagram of a method for combining outputs of a subset of models performed by an apparatus, for example a user equipment;
Fig. 10 shows a block diagram of a method for combining outputs of a subset of models by an apparatus, for example a location server such as a location management function; and
Fig. 11 shows a schematic representation of a non-volatile memory medium storing instructions which when executed by a processor allow a processor to perform one or more of the steps of the methods of Fig. 9 and Fig. 10.

### Detailed Description of the Figures

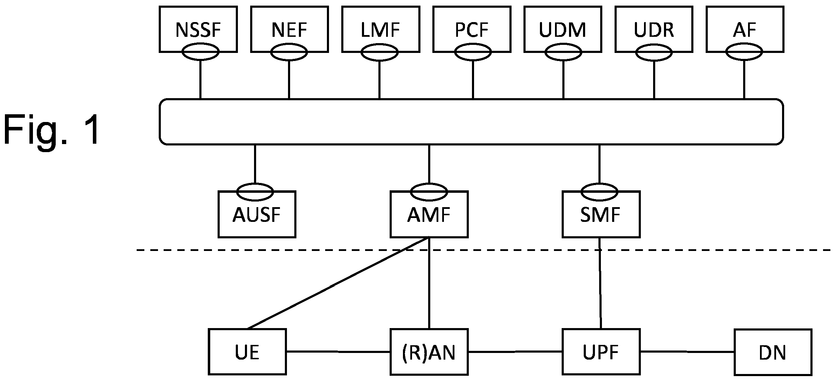

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Fig. 1, Fig.2 and Fig.3 to assist in understanding the technology underlying the described examples.

FIG. 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF), a network exposure function (NEF), a unified data repository (UDR), an application function (AF) and/or a location management function (LMF).

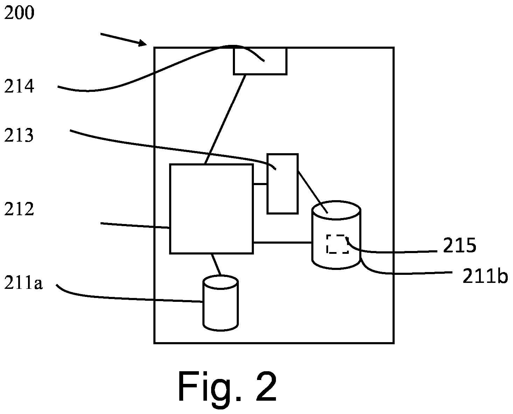

Fig. 2 illustrates an example of a control apparatus 200 for controlling a function of the (R)AN or the 5GC as illustrated on Fig. 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

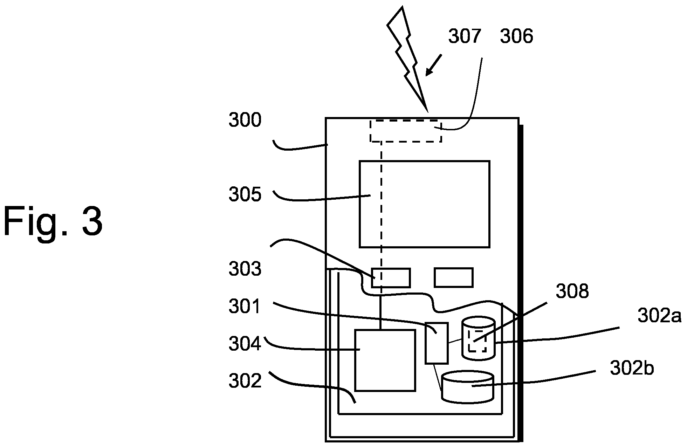

Fig. 3 illustrates an example of a UE 300, such as the UE illustrated on Fig. 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Fig. 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of this disclosure relate to configuring a UE to manage models, in particular artificial intelligence (AI) or machine learning (ML) models, for determining positioning information.

A UE may typically store a set of models for determining positioning information. The set of models may achieve a same functionality but in different scenarios. Storing a set of models rather than a single may ensure that a minimum target accuracy is achieved in different scenarios.

A functionality may comprise at least one of location estimation, line of sight estimation or time of arrival estimation. Location estimation may comprise two-dimensional or three-dimensional location estimation.

Scenarios may refer to geographical areas with specific propagation conditions. Scenarios may comprise at least one of an indoor scenario, an outdoor scenario, an urban scenario or a rural scenario.

A scenario may be referred to as a "known scenarios" when a model is available at the UE to achieve a functionality in this scenario.

A scenario may be referred to as an "unknown scenario" when no model is available at the UE to achieve a functionality in this scenario.

A scenario may be referred to as a "boundary scenario" when located in between "known scenarios".

The UE may not be aware of the scenarios in which it moves. A NW function (e.g. LMF) may therefore assist the UE and may trigger the UE to activate models, deactivate models or switch between models.

Due to memory and computational complexity constraints, a UE may only store a limited set of models per functionality. For example, the UE may store three models achieving a two-dimensional location estimation in three known scenarios, such as an indoor scenario, an urban (i.e. high population density) outdoor scenario and a rural (i.e. low population density) outdoor scenario.

When the UE moves in a boundary scenario or move to an unknown scenario), no model may be available. The UE may use a suboptimal model and the two-dimensional location estimation accuracy may drop below a minimum target accuracy.

The limited set of models per functionality may also trigger unnecessary ping pongs amongst models and even amongst functionalities. For example, when the UE moves to a boundary scenario or to an unknown scenario, the NW may trigger the UE to switch model if the performance of a current model is not satisfactory, without having any guarantee that the performance of a subsequent model will be better.

One or more aspect of this disclosure provides a mechanism to prevent ping pongs amongst models and performance degradation which are caused by limited set of models per functionality available at the UE.

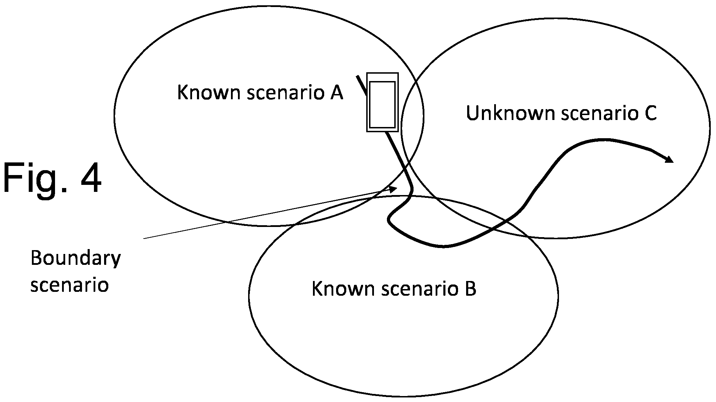

Fig. 4 shows a schematic representation of a UE moving through different scenarios. The UE may initially be in a scenario A (i.e. known scenario). The UE may move in between the scenario A (i.e. known scenario) and a scenario B (i.e. known scenario). That is, the UE may move to an boundary scenario. The UE may move to the scenario B (i.e. known scenario). The UE may move to a scenario C (i.e. unknown scenario).

The UE may store a set of models achieving the same functionality but in different known scenarios. The set of models may comprise a model achieving the functionality in scenario A. The set of models may comprise a model achieving the functionality in scenario B. The set of models may not comprise a model achieving the functionality in scenario C.

One or more aspects of this disclosure provide a mechanism for combining outputs of a subset of models.

A UE may send, to a NW function, information indicating functionalities available at the UE. The functionalities may comprise at least one of a location estimation, a line of sight estimation, a time of arrival estimation, an angle of arrival (AOA) estimation, an angle of departure (AOD) estimation or a carrier phase (CP) estimation. For example, the UE may send, to a NW function, IDs identifying the functionalities. The availability may be temporary (e.g. specific to a cell) or permanent (e.g. generic to all cells).

The UE may send, to the NW function, a set of models available at the UE. The set of models may achieve a same functionality in different known scenarios. The different scenarios may comprise be at least one of an indoor scenario, an outdoor scenario, an urban (i.e. high population density) scenario or a rural (i.e. low population density) scenario. For example, the UE may send, to a NW function, IDs identifying the set of models. The availability may be temporary or permanent. The availability may be temporary (e.g. specific to a cell) or permanent (e.g. generic to all cells).

The NW function may estimate movements of the UE. Several techniques may be used by the NW function to estimate movements of the UE. For example, the NW function may use mobility (e.g. selection or handover) information regarding the UE from a serving BS to estimate movements of the UE.

When the NW function estimates that the UE will move to a boundary scenario or that the UE will move to an unknown scenario, the NW may send information indicating a subset of models Sa amongst the set of models to be activated simultaneously and a combination function f_Sa for combining outputs of the subset of models Sa.

In an implementation, the NW function may determine the subset of models Sa. Information indicating the subset of models Sa may comprise IDs identifying the subset of models Sa determined by the NW function.

In another implementation, the NW function may not determine the subset of models Sa. The NW may determine at least one criterion to be used by the UE to determine the subset of models Sa. Information indicating the subset of models may comprise the at least one criterion.

The at least one criterion may define at least one rule to be used by the UE to determine the subset of models Sa. If the at least one criterion is met a model may be part of the subset of models Sa. If the at least one criterion is not met a model may not be part of the subset of models Sa.

The at least one criterion may comprise a similarity between a data set available at the UE and a data set used to train the subset of models Sa. The similarity may refer to a similarity between distributions.

A data set may comprise a plurality of entries. An entry may comprise a plurality of measurements. The plurality of measurements may comprise at least one of a SINR measurement, a LOS measurement, an AOA measurement or an AOD measurement. An entry may correspond to a UE.

The at least one criterion may comprise a similarity between distributions of measurements of a data set available at the UE and measurements of a data set used to train the subset of models Sa.

A similarity between distributions of measurements of a data set available at the UE and measurements of a data set used to train the subset of models Sa may refer to a difference between parameters of the distribution of measurements of the data set available at the UE and parameters of the distribution of measurements of the data set used to train the subset of models Sa being lower than a threshold.

Parameters of the distribution may comprise a mean or a variance.

In an example, the at least one criterion may comprise a similarity between distributions of SINR measurements of a data set available at the UE and SINR measurements of a data set used to train the subset of models Sa.

In an implementation, the combination function f_Sa may perform an average of the outputs of the subset of models Sa (i.e. arithmetic mean).

In an implementation, the combination function f_Sa may perform a weighted average of the outputs of the subset of models Sa (i.e. the weighs may be proportional to the accuracy of the output of the models).

In an implementation, the combination function f_Sa may perform a weighted powered average of the outputs of the subset of models Sa (i.e. the weighs may be raised at a power N, with N equal to or greater than 2).

In an implementation, the combination function f_Sa may perform a median of the outputs of the subset of models Sa.

The NW function may send information indicating the subset of models Sa to be activated simultaneously and the combination function f_Sa for combining outputs of the subset of models Sa in a new information element (IE) in location positioning protocol (LPP) assistance data (AD). The NW function may send, to the UE, information indicating a duration during which the subset of models Sa and the combining function f_Sa are valid.

The UE may activate the subset of models Sa simultaneously.

The UE may use the combination function f_Sa to combine outputs of the subset of models Sa. The combined output may indicate positioning information.

The UE may send, to the NW function, the combined output.

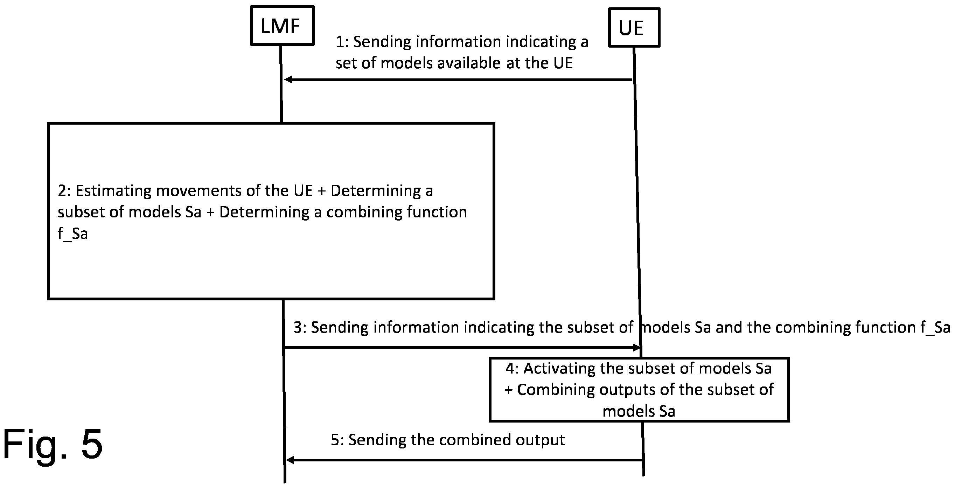

Fig. 5 shows a signaling diagram of a process for combining outputs of a subset of models.

In step 1, a UE may send, to a LMF, information indicating a set of models available at the UE. The set of models achieve a same functionality in different known scenarios.

For example, the functionality may be two-dimensional location estimation. The different known scenarios may comprise scenario A and scenario B.

In step 2, the LMF may estimate movements of the UE. When the LMF estimates the UE will move to a boundary scenario or to an unknown scenario, the LMF may determine a subset Sa of models to be activated simultaneously amongst the set of models available at the UE. The LMF may determine a combination function f_Sa for combining outputs of the subset Sa of models.

For example, the LMF may estimate that the UE will move in between scenario A and scenario B, that is that the UE will move to a boundary scenario. Alternatively, the LMF may estimate will move to scenario C. The LMF may determine a subset of models Sa comprising the model achieving two-dimensional location estimation in scenario A and the model achieving two-dimensional location estimation in scenario B. The LMF may determine a combining function f_Sa performing a weighted average of the output of the model achieving two-dimensional location estimation in scenario A and the output of the model achieving two-dimensional location estimation in scenario B. The weight of the output of the model achieving two-dimensional location estimation in scenario A may be proportional to the accuracy of the model achieving two-dimensional location estimation in scenario A. The weight of the output of the model achieving two-dimensional location estimation in scenario B may be proportional to the accuracy of the model achieving two-dimensional location estimation in scenario B.

In step 3, the LMF may send, to the UE, information indicating the subset of models Sa and the combining function f_Sa. The information indicating the subset of models Sa and the combining function f_Sa may be sent in the new IE in LPP assistance data. Here, the LMF may send IDs identifying the subset of models Sa and an ID identifying the combining function f_Sa. The LMF may send, to the UE, information indicating a duration during which the subset of models Sa and the combining function f_Sa are valid.

In step 4, the UE may activate the subset of models Sa simultaneously. The UE may combine outputs of the subset of models Sa based on the combining function f_Sa.

In step 5, the UE may send, to the LMF, the combined outputs of the subset of models Sa.

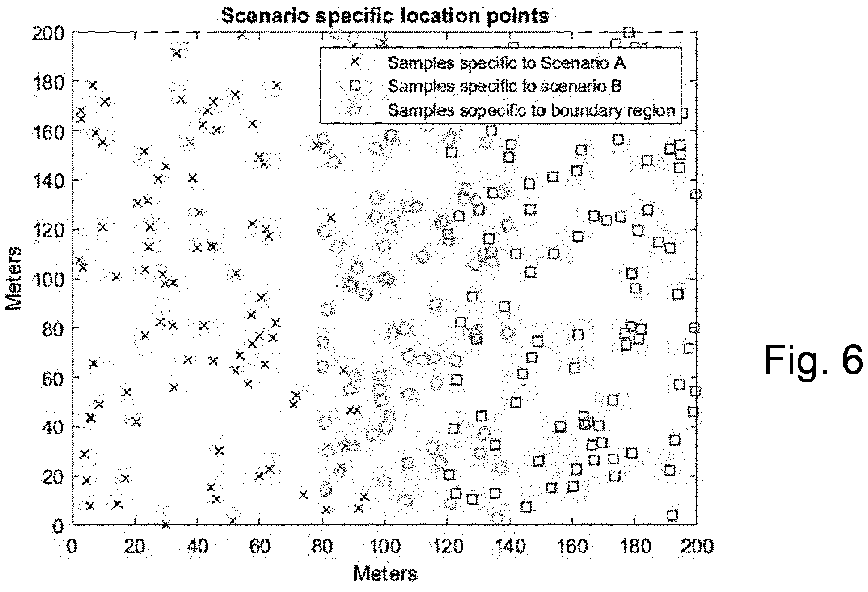

Fig. 6 shows a graph with position information determined for different scenarios and in between scenarios.

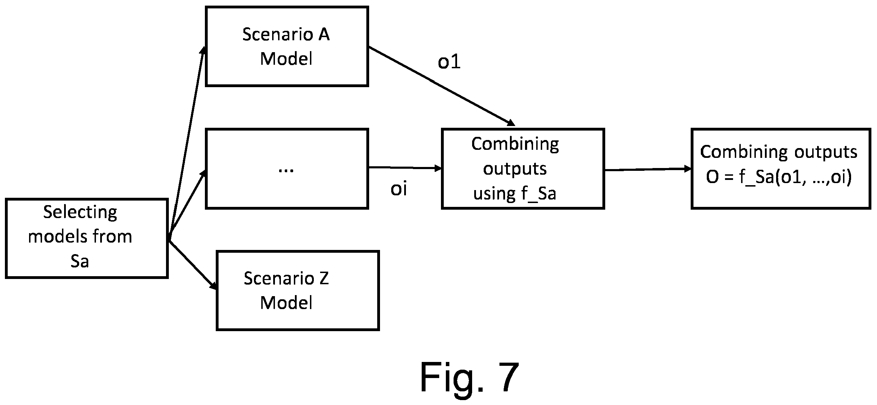

Fig. 7 shows a block diagram of a method for combining outputs of a subset of models. The UE may select models from the subset of models Sa. The UE may activate the selected models simultaneously. The UE may combine outputs of the selected models using the function f_Sa to return the combined output.

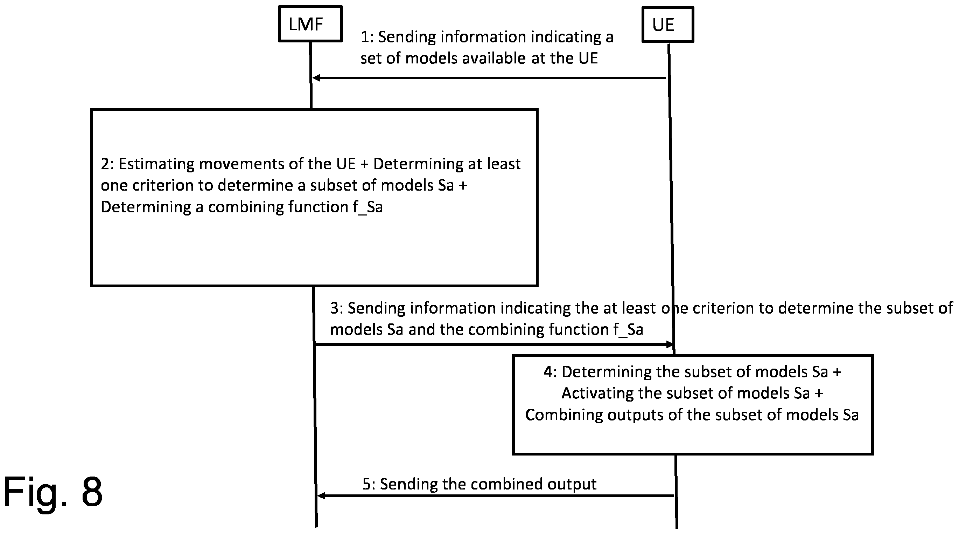

Fig. 8 shows a signaling diagram of an alternative process for combining outputs of a subset of models Sa.

In step 1, a UE may send, to a LMF, information indicating a set of models available at the UE. The set of models achieve a same functionality in different known scenarios.

For example, the functionality may be two-dimensional location estimation. The different known scenarios may comprise scenario A and scenario B.

In step 2, the LMF may estimate movements of the UE. When the LMF estimate the UE will move to a boundary scenario or to an unknow scenario, the LMF may determine at least one criterion to determine a subset Sa of models to be activated simultaneously amongst the set of models available at the UE. The LMF may determine a combination function f_Sa for combining outputs of the subset Sa of models.

In step 3, the LMF may send, to the UE, information indicating the at least one criterion and the combining function f_Sa. The information indicating the at least one criterion and the combining function f_Sa may be sent in the new IE in LPP assistance data. Here, the LMF may send an ID identifying the at least one criterion and an ID identifying the combining function f_Sa. The LMF may send, to the UE, information indicating a duration during which the at least one criterion and the combining function f_Sa are valid.

In step 4, the UE may determine a subset of models Sa based on the at least one criterion. The UE may activate the subset of models Sa simultaneously. The UE may combine outputs of the subset of models Sa based on the combining function f_Sa.

In step 5, the UE may send, to the LMF, the combined outputs of the subset of models Sa.

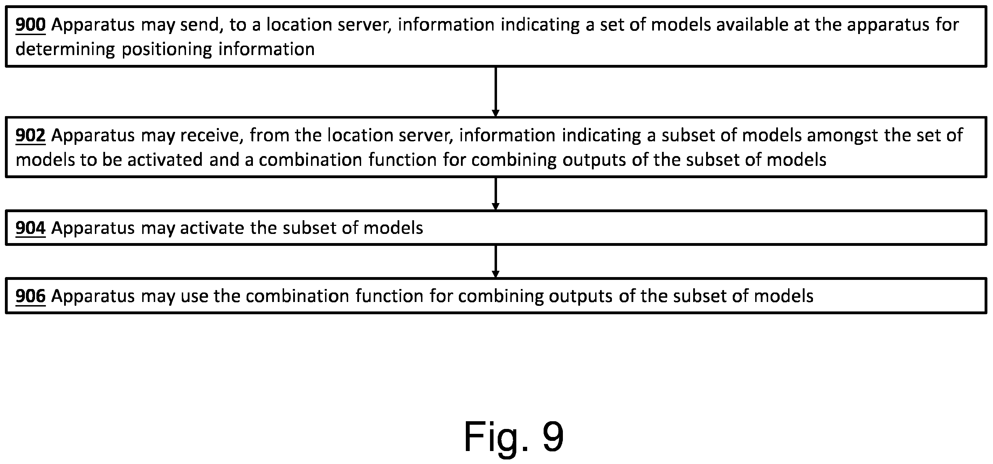

Fig. 9 shows a block diagram of a method for combining outputs of a subset of functionalities performed by an apparatus, for example a UE.

In step 900, an apparatus may send, to a location server, information indicating a set of models available at the apparatus for determining positioning information. A location server may comprise a LMF.

In step 902, the apparatus may receive, from the location server, information indicating a subset of models amongst the set of models to be activated and a combination function for combining outputs of the subset of models.

In step 904, the apparatus may activate the subset of models.

In step 906, the apparatus may use the combination function for combining outputs of the subset of models.

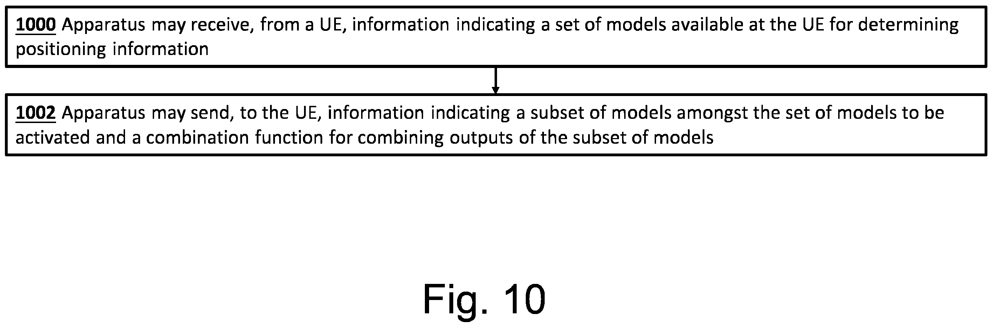

Fig. 10 shows a block diagram of a method for combining outputs of a subset of functionalities performed by an apparatus, for example a location server such as a LMF.

In step 1000, an apparatus may receive, from a UE, information indicating a set of models available at the UE for determining positioning information.

In step 1002, the apparatus may send, to the UE, information indicating a subset of models amongst the set of models to be activated and a combination function for combining outputs of the subset of models.

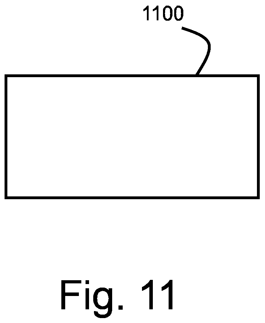

Fig. 11 shows a schematic representation of non-volatile memory media 1100 storing instructions which when executed by a processor allow the processor to perform one or more of the steps of the methods of Fig. 9 and Fig. 10.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Fig. 9 and Fig. 10, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. An apparatus comprising means for:
sending, to a location server, information indicating a set of models available at the apparatus for determining positioning information;
receiving, from the location server, information indicating a subset of models amongst the set of models to be activated and a combination function for combining outputs of the subset of models;
activating the subset of models; and
using the combination function for combining outputs of the subset of models.

2. The apparatus of claim 1, wherein the set of models achieves a same functionality in different scenarios.

3. The apparatus of claim 2, wherein a functionality comprises at least one of:
location estimation;
line of sight estimation;
time of arrival estimation;
an angle of arrival estimation; an angle of departure estimation; or
a carrier phase estimation.

4. The apparatus of any of claims 1 to 3, wherein the information indicating the subset of models comprises identifiers of the subset of models determined at the location server.

5. The apparatus of any of claims 1 to 4, wherein the information indicating the subset of models comprises at least one criterion to determine the subset of models; and
wherein the least one memory stores instructions that, when executed by the at least one processor, cause the apparatus at least to: determine the subset of models based on the at least one criterion.

6. The apparatus of claim 5, wherein the at least one criterion comprises a similarity between measurements of a data set available at the apparatus and measurements of a data set used to train the subset of models.

7. The apparatus of claim 6, wherein the at least one criterion comprises a similarity between distributions of measurements of a data set available at the apparatus and measurements of a data set used to train the subset of models.

8. The apparatus of claim 6 or claim 7, wherein the measurements of the data set available at the apparatus and the measurements of the data set used to train the subset of models comprise signal to interference plus noise ratio measurements.

9. The apparatus of any of claims 1 to 8, wherein the combination function performs at least one of:
an average of the outputs of the subset of models;
a weighted average of the outputs of the subset of models;
a weighted powered average of the outputs of the subset of models; or
a median of the outputs of the subset of models.

10. The apparatus of any of claims 1 to 9, wherein the means are further configured for:
sending, to the location server, the combined outputs.

11. An apparatus comprising means for:
receiving, from a user equipment, information indicating a set of models available at the user equipment for determining positioning information; and
sending, to the user equipment, information indicating a subset of models amongst the set of models to be activated and a combination function for combining outputs of the subset of models.

12. The apparatus of claim 11, wherein the means are further configured for:
determining the subset of models; and
wherein the information indicating the subset of models comprises at least one identifier of the determined subset of models.

13. The apparatus of claim 11 or 12, wherein the means are further configured for:
estimating a movement of the user equipment; and
determining the subset of models based on the estimation.

14. A method comprising:
sending, to a location server, information indicating a set of models available at the apparatus for determining positioning information;
receiving, from the location server, information indicating a subset of models amongst the set of models to be activated and a combination function for combining outputs of the subset of models ;
activating the subset of models; and
using the combination function for combining outputs of the subset of models.

15. A method comprising:
receiving, from a user equipment, information indicating a set of models available at the user equipment for determining positioning information; and
sending, to the user equipment, information indicating a subset of models amongst the set of models to be activated and a combination function for combining outputs of the subset of models.
